# FASCICULE DE BREVET EUROPEEN

(11) **EP 2 014 553 B1**
(45) Date de publication et mention de la délivrance du brevet: **11.05.2011**
(21) Numéro de dépôt: 08104727.6
(22) Date de dépôt: 11.07.2008
(51) Int. Cl.: B64G 1/42

(54) **Architecture décentralisée de distribution électrique et de données pour satellite**
Dezentralisierte Architektur zur Strom- und Datenverteilung für Satelliten
Decentralised architecture for electrical distribution and distribution of data for satellite

(30) Priorité: 12.07.2007 FR 0705052
(43) Date de publication de la demande: 14.01.2009
(73) Titulaire: Astrium SAS, 75016 Paris (FR)
(72) Inventeur: Terron , Frédéric, 31830, Plaisance du Touch (FR); Gillot , Bernard, 31650, Saint Orens de Gameville (FR)
(74) Mandataire: Maupilier, Didier

(56) Documents cités:
- EP-A- 1 736 409
- FR-A- 2 855 918
- US-A- 5 798 574
- US-B1- 6 465 908

## Description

La présente invention appartient aux domaines de la distribution électrique et de la gestion de données à bord des satellites.

En particulier l'invention concerne une architecture électrique de satellite dans lequel les fonctions de contrôle et de commande et d'alimentations électriques des équipements transitent par des équipements décentralisés standardisés et pouvant être configurés individuellement.

A bord d'un satellite se trouvent différents équipements qui nécessitent des surveillances et/ou des commandes et/ou d'être raccordés à une source d'énergie électrique.

Ces différents équipements sont raccordés à un système de distribution électrique pour être alimentés en fonction des sources d'énergie électrique disponibles, panneaux solaires ou batteries notamment, et pour être connectés à un système de gestion centralisé.

Le plus souvent l'énergie est distribuée aux différents consommateurs par l'intermédiaire d'un câblage dit en étoile, c'est à dire que les différents câbles d'alimentation des consommateurs d'énergie sont issus d'un point commun correspondant à un équipement de distribution de l'énergie qui, en fonction de commandes reçues, commute l'énergie électrique sur les différents câbles avec les caractéristiques et les protections souhaitées.

Les signaux de contrôle et de commande entre les différents équipements consommateurs et le système de gestion centralisé sont également acheminés, soit au moyen d'un bus de communication numérique, soit au moyen d'un câblage en étoile suivant des cheminements identiques ou différents du câblage de distribution de l'énergie électrique.

Un inconvénient majeur d'un tel dispositif est lié à la spécificité des équipements centralisés de distribution de l'énergie et de gestion des données par rapport au satellite considéré.

Un satellite est en général globalement constitué d'une part d'une plate-forme regroupant des servitudes, en particulier liées à la propulsion, au contrôle d'attitude, et à la génération d'énergie, et d'autre part d'une charge utile, par exemple un système d'observation optique.

Pour diminuer les coûts d'études et de réalisation des satellites il est souvent recherché d'utiliser tout ou partie de la conception d'une plate-forme pour réaliser des satellites qui diffèrent essentiellement par leurs charges utiles.

Dans le cas d'une architecture électrique centralisée il est alors nécessaire de concevoir de nouveaux équipements centralisés de distribution de l'énergie et de gestion des données adaptés à chaque nouvelle charge utile et aux évolutions ou aux adaptations souvent nécessaires de la plate-forme.

Bien que généralement considérée comme une solution optimale en terme de masse, les câblages en étoiles, qui connectent les différents équipements de la plate-forme et de la charge utile, sont souvent difficiles à installer et leurs modifications sont également sources de problèmes lorsque des évolutions doivent être appliquées en cours d'intégration du satellite.

Cette solution dite de distribution-contrôles-commandes centralisés ne s'avère donc pas économiquement avantageuse, en particulier dans le contexte de familles de satellites construits autour d'une plate-forme commune.

Une solution pour atténuer les défauts de cette architecture centralisée, décrite dans la demande de brevet français publiée sous le numéro FR 2855918, présente une architecture de distribution électrique décentralisée dans laquelle des modules d'alimentation déportés sont connectés à un réseau de distribution d'énergie électrique et reçoivent des signaux d'un bus de commande pour activer des commutateurs de puissance ou des convertisseurs de tensions.

Suivant l'architecture proposée par l'invention chaque équipement est associé à un module convertisseur d'alimentation déporté, les commutateurs de puissance du dit module déporté pouvant être utilisés comme moyen de commutation de sécurité pour ledit équipement ou comme commande pour l'alimentation électrique d'un élément auxiliaire tel qu'un élément chauffant.

Un inconvénient de l'architecture ainsi proposée vient du fait qu'elle entraîne la multiplication des modules déportés et que des modules différents doivent être envisagés lorsque les consommateurs raccordés ont des exigences électriques différentes.

En outre, il est toujours nécessaire dans une telle architecture de distribution d'alimentation électrique partiellement décentralisée de mettre en place un harnais électrique en étoile pour les contrôles et pour les commandes des équipements non connectés au bus de communication numérique satellite.

Pour simplifier la réalisation de l'installation électrique d'un satellite et faciliter son intégration, l'invention propose un satellite dont les équipements sont connectés à un système électrique, comportant un réseau de distribution de puissance, un réseau de télémesure et un réseau de télécommande, et qui présente les caractéristiques suivantes :
- le satellite est électriquement séparé en deux ou plusieurs zones déterminant chacune un groupe d'équipements ;
- dans chaque zone les équipements du groupe d'équipements sont connectés à un système électrique indépendant, limité à la zone, comportant un réseau de distribution de puissance, un réseau de télémesure et un réseau de télécommande ;
- le réseau de distribution de puissance, le réseau de télémesure et le réseau de télécommande du système électrique d'une même zone sont raccordés par une première série d'interfaces à un boîtier standard de distribution électrique et de gestion associé à ladite zone ;
- le boîtier standard de distribution électrique et de gestion de chaque zone est raccordé à un réseau de distribution de puissance du satellite et à un réseau de communication du satellite par une seconde série d'interfaces.

Afin de réaliser une architecture électrique du satellite performante et économique, avantageusement le satellite utilise des boîtiers standards de distribution électrique et de gestion mécaniquement et électriquement interchangeables.

Pour répondre aux besoins des différents types d'interface nécessaires pour différents équipements, sans multiplier le nombre d'interfaces, les configurations fonctionnelles de certains modules des boîtiers standards de distribution et de gestion sont modifiables par programmation, avantageusement au moyen de la liaison par un bus de communication numérique du satellite tel qu'un bus CAN ou un bus à la norme Mil Std 1553, et ou modifiables par des moyens physiques externes.

En particulier :
- un ou des modules de traitement de signaux numériques reçus ou devant être émis vers un équipement sont aptes à être programmés pour émettre des signaux suivant au moins la norme UART, ou en acquisition série 16 bits en réception, ou en commande série 16 bits en émission, ou en horloge plus masque pour acquisition série 16 bits, ou en commandes bas niveau, ou en signaux de synchronisation ;
- un ou des modules recevant des entrées destinées à être raccordées à des capteurs de température du type « thermistance » ou à recevoir des signaux analogiques de tension comporte des gammes d'acquisition de valeurs pouvant être définies par programmation ;
- un ou des modules destinés à traiter des signaux reçus sur des entrées ou émis sur des sorties numériques au standard RS-422 sont programmables pour être aptes à échanger des messages suivant différents protocoles de communication et/ou débits ;
- un ou des modules de contrôle de distributions de puissance, comportant un ou des limiteurs de courants, comportent des calibres de limiteurs de courant, protégeant des lignes de distribution de puissance, modifiables par programmation ;
- un ou des modules de contrôle de distributions de puissance, comportant un ou des limiteurs de courants, comportent des types de limiteurs de courant, protégeant des lignes de distribution de puissance, modifiables par des moyens physiques externes.

Pour faciliter les opérations de vérification et d'intégration du satellite, de préférence les zones sont déterminées pour correspondre à des panneaux ou à des groupes de panneaux portant des équipements, panneaux destinés à être assemblés dans le satellite.

Est également décrit, un boîtier standard de distribution électrique et de gestion pour satellite qui comporte une première série d'interfaces de raccordement à au moins un réseau de distribution de puissance, un réseau de télécommande et un réseau de télémesure d'une zone du satellite et comporte une seconde série d'interfaces de raccordement à au moins un réseau de distribution et un réseau de communication du satellite.

Pour la liaison fonctionnelle et les alimentations en puissance des équipements d'une zone du satellite, la première série d'interface d'un boîtier standard de distribution électrique et de gestion comporte au moins :
- une interface de distribution de puissance électrique sur différentes lignes de distribution et ou ;
- une interface d'acquisition de signaux analogiques et ou ;
- une interface de commande de puissance et ou ;
- une interface de réception de signaux numériques, avantageusement au standard RS-422, et ou ;
- une interface d'émission de signaux numériques, avantageusement au standard RS-422.

Pour assurer la liaison fonctionnelle des équipements de la zone avec les autres parties du satellite, la seconde série d'interface d'un boîtier standard de distribution électrique et de gestion comporte au moins :
- une interface de raccordement à un bus de puissance électrique du satellite et ;
- une interface de réception de signaux numériques émis sur un bus du réseau de communication du satellite et ;
- une interface de réception de signaux numériques émis sur un bus du réseau de communication du satellite.

Avantageusement les interfaces de réception et d'émission des signaux numériques sont adaptées à des bus CAN ou à des bus à la norme Mil Std 1553 en fonction du type de bus mis en oeuvre sur le satellite considéré.

Un boîtier standard de distribution électrique et de gestion comporte alors de préférence au moins :
- un module de contrôle de la distribution de la puissance électrique du bus de puissance électrique du satellite sur les différentes lignes de distribution de puissance et ;
- un module d'acquisition et d'émission des signaux numériques depuis et vers le bus de communication numérique du satellite et ou ;
- un module de traitement des signaux analogiques reçus et ou ;
- un module de commande de puissance et ou ;
- un module de traitement des signaux numériques reçus d'un équipement et ou ;
- un module de traitement des signaux numériques devant être émis vers un équipement ;
- un module de traitement qui assure localement la gestion des autres modules et/ou traite des signaux reçus et/ou élabore des signaux à émettre en fonction de logiques et d'algorithmes mémorisés dans le module de traitement.

Pour répondre aux exigences de sûreté de fonctionnement, de préférence, chaque boîtier standard de distribution électrique et de gestion comporte une première voie associée à un ensemble de modules et une seconde voie associée à un ensemble de modules identique à celui de la première voie, la première voie et la seconde voie étant aptes à échanger des données pour assurer la gestion de modules en redondance chaude.

Un boîtier standard de distribution électrique et de gestion comporte des interfaces et des modules de traitement et de gestion :
- d'entrées de signaux analogiques, par exemple deux fois cinq entrées ;
- d'entrées pour capteurs de température d'un type « thermistance », par exemple deux fois quinze entrées ;
- d'entrées pour capteurs de température d'un type « sonde platine », par exemple deux fois deux entrées ;
- d'entrées pour signaux d'état à deux niveaux, par exemple deux fois trois entrées ;
- d'entrées pour signaux d'états de relais, par exemple deux fois quatre ;
- d'entrées numériques en réception suivant le standard RS-422, par exemple deux fois trois entrées ;
- de commandes dites bas niveau, par exemple deux commandes et leurs redondances ;
- de sorties numériques en émission suivant le standard RS-422, par exemple six sorties et leurs redondances ;
- de commandes de puissance, par exemple six commandes et leurs redondances ;
- de lignes de distribution protégées par limiteurs de courant, par exemple cinq lignes ;
- de lignes pour dispositifs de réchauffage protégées par limiteurs de courant, par exemple cinq lignes et leurs redondances.

La présentation détaillée d'un mode de réalisation de l'invention est faite en référence aux figures qui représentent de manière non limitative :
- Figure 1 : une vue éclatée d'une partie d'un satellite comportant les équipements principaux du satellite ;
- Figure 2a et figure 2b : une représentation à plat du fond et des parois du satellite de la figure 1 illustrant des liaisons entre les équipements ;
- Figure 3 : une représentation schématique de l'architecture électrique d'un satellite suivant l'invention ;
- Figure 4 : une représentation schématique des différents modules d'une voie d'un boîtier standard de distribution électrique et de gestion suivant l'invention et de ses interfaces fonctionnelles ;
- Figure 5 : une illustration pour une voie d'un exemple de réalisation d'un boîtier standard de distribution électrique et de gestion.

Suivant l'invention, l'architecture électrique d'un satellite est réalisée en considérant le satellite, virtuellement, comme un assemblage de deux ou plusieurs zones.

De préférence, la détermination du périmètre des zones est réalisée en considérant l'architecture physique du satellite et en particulier la position des différents équipements.

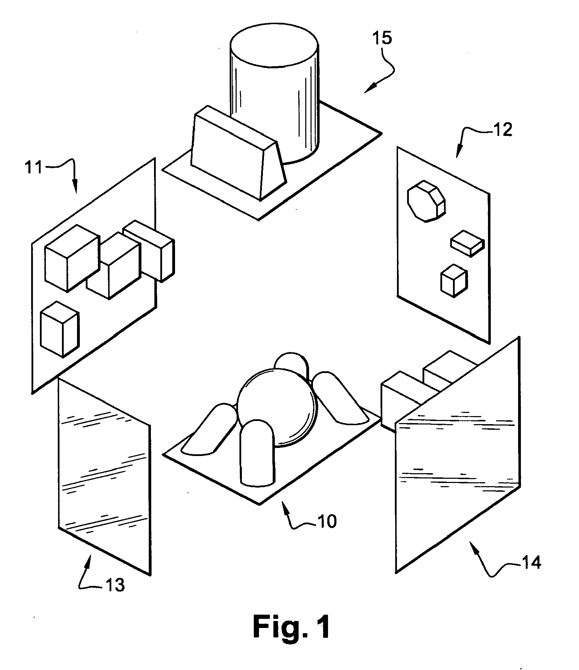

La figure 1 illustre une structure éclatée d'une partie centrale d'un satellite physiquement constituée, essentiellement, d'un ensemble de panneaux assemblés pour former une structure en forme de parallélépipède rectangle.

Chaque panneau sert de support à des équipements, et le plus souvent chaque panneau est spécialisé dans une fonction ou un ensemble de fonctions particulières du satellite liées à des servitudes, c'est à dire des fonctions générales telles que les ressources électriques ou le contrôle d'attitude, ou à une charge utile telle qu'un ensemble de moyens de télécommunication ou de moyens d'observation.

Dans l'illustration de la figure 1, la partie considérée du satellite comporte 6 panneaux supportant des d'équipements, un panneau principal 10, dit fond, quatre panneaux latéraux 11, 12, 13, 14, dits parois, et un panneau supérieur 15.

Dans l'exemple illustré, le panneau principal 10 et le panneau supérieur 15 portent des moyens de propulsion et des moyens dédiés au contrôle d'attitude du satellite et les parois portent des équipements de servitudes, par exemple de génération électrique et des moyens de gestion du satellite sur une première paroi 11, des senseurs sur une deuxième paroi 12 et sur une troisième paroi 13, et portent des équipements de charge utile sur la quatrième paroi 14.

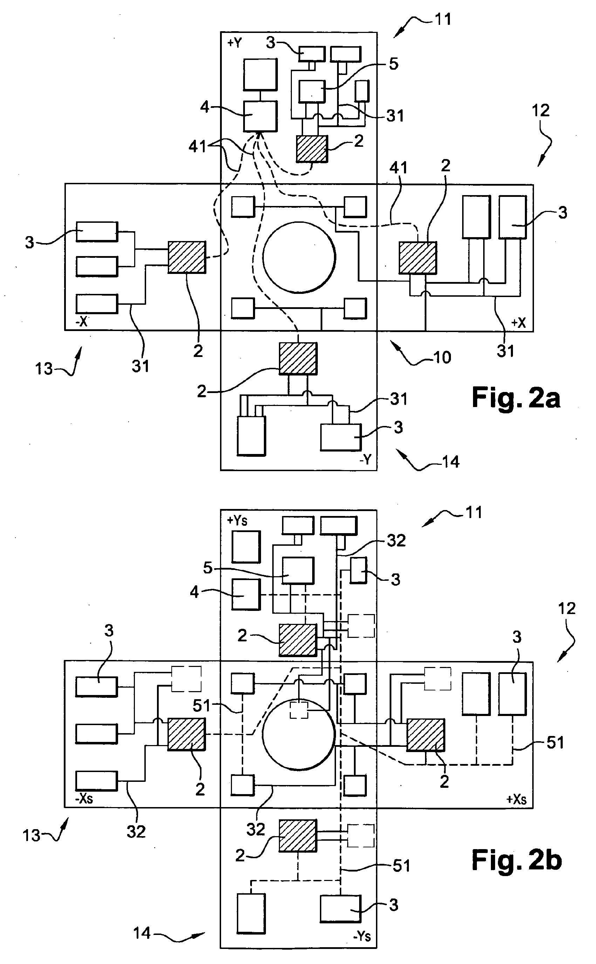

Les figures 2a et 2b présentent les parois et le panneau principal à plat avec les côtés communs des parois et du panneau principal juxtaposés pour une meilleure visualisation des équipements de chaque panneau et des liaisons électriques entre les équipements.

Chaque équipement 3 nécessite, dans le cas le plus général, d'être raccordé à une alimentation électrique, génère des signaux de télémesure, dit contrôle, par exemple la valeur d'une mesure effectuée par un capteur tel qu'un capteur de température ou un capteur de tension électrique, et reçoit des signaux de télécommande, dit commande, qui correspondent à des instructions destinées à l'équipement par exemple relatives à des modes de fonctionnement qui doivent être activés.

Le fond 10 et la deuxième paroi 12 constituent une zone et chacune des première, troisième et quatrième parois 11, 13, 14 du satellite constitue une zone. Dans le cas, non représenté, d'une paroi complexe comportant un nombre élevé d'équipements, ladite paroi est avantageusement découpée virtuellement en plusieurs zones.

Par simplification le terme équipement s'applique également dans la présente description à des équipements complexes, à des capteurs isolés, à des actionneurs isolés ou à des lignes de réchauffage.

Pour chaque zone déterminée un équipement spécifique de l'invention, dit boîtier standard de distribution électrique et de gestion 2, désigné boîtier standard dans la suite de la description, est associé à ladite zone.

Avantageusement ledit boîtier standard est physiquement installé sur une paroi de la zone considérée afin de limiter les câblages électriques et de faciliter l'intégration du satellite lors de l'assemblage de parois équipées.

Le boîtier standard 2 comporte deux séries d'interfaces fonctionnelles électriques.

Une première série d'interfaces fonctionnelles électriques est raccordée aux équipements 3 de la zone par des lignes électriques et comporte potentiellement pour chaque équipement des lignes d'alimentation électriques 31 illustrées sur la figure 2a, des lignes de contrôle et des lignes de commande 32 illustrées sur la figure 2b qui sont nécessaires à l'équipement.

Une seconde série d'interfaces fonctionnelles électriques est raccordée d'une part à un réseau 41 de distribution de l'énergie électrique du satellite géré par un dispositif 4 de gestion centralisé de la puissance électrique et d'autre part à des bus de communication 51 avec des moyens de gestion centralisée 5 du satellite.

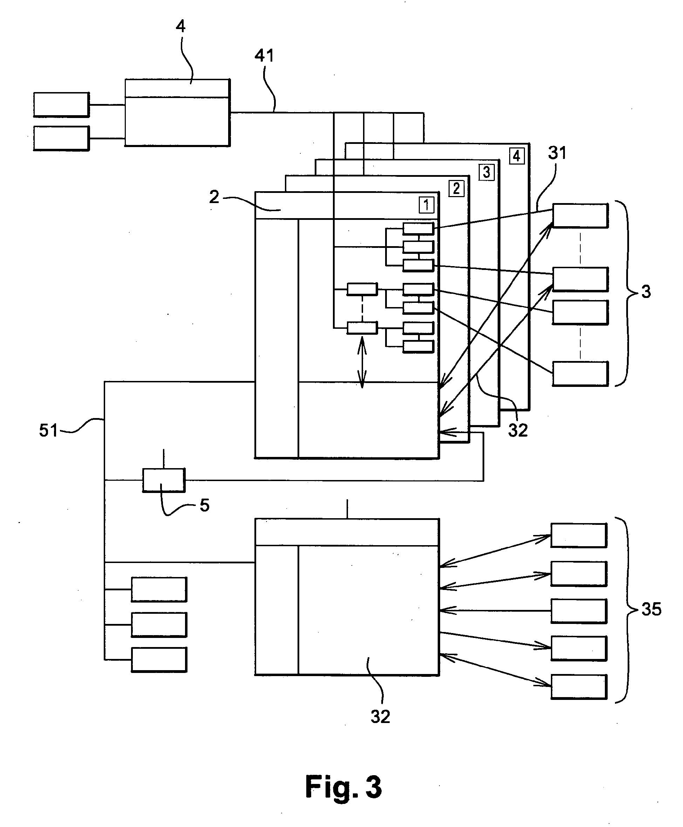

Suivant l'architecture électrique proposée dont un schéma électrique de principe est illustré sur la figure 3, tous les équipements 3 d'une même zone sont raccordés électriquement, pour les liaisons électriques qui ne sont pas sur le plan fonctionnel limitées à ladite zone, c'est à dire qui seraient sans l'invention raccordées à une autre zone du satellite, à un unique boîtier standard 2 de la zone.

En outre tous les boîtiers standards 2 des différentes zones sont physiquement identiques. Par physiquement identique, il convient de comprendre que les boîtiers sont mécaniquement et électriquement interchangeables.

Avantageusement les boîtiers standards d'un satellite sont totalement identiques, toutefois des différences matérielles n'affectant pas l'interchangeabilité, par exemple des modifications internes de composants n'affectant pas les fonctions réalisées par le boîtier, restent possibles sans affecter l'esprit de l'invention.

De préférence certains équipements spécifiques 35 du satellite, c'est à dire des équipements qui par leurs fonctions ou par leurs interfaces électriques sont éloignés des autres équipements 3 du satellite ou présentent des exigences électriques particulières, par exemple des équipements du système de propulsion ou certains capteurs du contrôle d'attitude, sont raccordés électriquement à un ou des boîtiers spécifiques 32, de contrôle et de commande.

Pour répondre aux exigences des équipements 3 d'une zone quelconque, chaque boîtier standard 2 comporte un ensemble de modules participant au fonctionnement du boîtier standard.

Les différents modules d'un boîtier standard sont donc en mesure de raccorder n'importe quel équipement 3, autre que les équipements spécifiques 35, du satellite devant être raccordé au système de distribution électrique et au système de gestion des données en utilisant notamment les capacités de reconfiguration par programme de ces derniers.

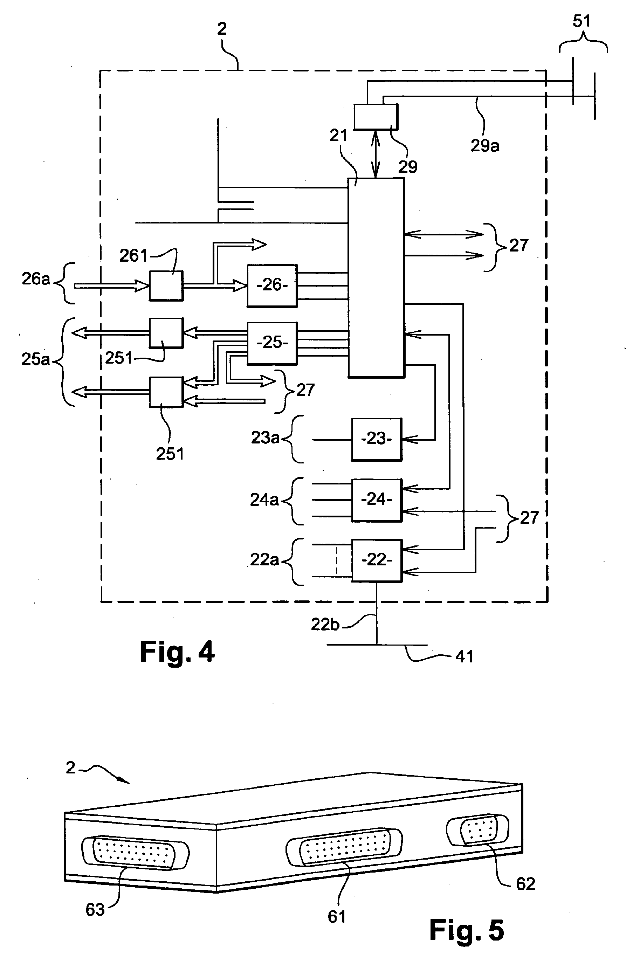

En référence à la figure 4, qui correspond au cas d'un boîtier standard apte à satisfaire les besoins pour la plupart des satellites, la première série d'interfaces fonctionnelles comporte :
- une interface 22a de distribution de puissance électrique sur différentes lignes d'alimentation ;
- une interface 24a d'acquisition de signaux analogiques ;
- une interface 23a de commande de puissance ;
- une interface 26a de réception de signaux numériques ;
- une interface 25a d'émission de signaux numériques.

La seconde série d'interfaces fonctionnelles comporte :
- une interface 22b de raccordement à un bus de puissance électrique du satellite ;
- une interface 29a de réception de signaux sur un bus de communication numérique du satellite ;
- une interface 29a d'émission de signaux sur un bus de communication numérique du satellite.

Avantageusement pour cette seconde série d'interface, l'interface de réception et l'interface d'émission de signaux numériques correspondent à une interface 29a d'un bus bidirectionnel de communication, par exemple une interface pour un bus numérique bidirectionnel au standard Mil Std 1553 généralement utilisé sur les satellites ou une interface pour bus CAN.

Pour chaque type d'interfaces, le boîtier standard comporte des modules spécialisés aptes d'une part à émettre ou à recevoir les signaux électriques vers ou en provenance des équipements, en particulier en regard des niveaux et des formes de signaux attendus.

Ainsi le boîtier d'interface comporte au moins :
- un module 22 de contrôle de la distribution de la puissance électrique du bus de puissance du satellite sur les différentes lignes d'alimentation ;
- un module 24 de traitement des signaux analogiques reçus ;
- un module 23 de génération de commandes de puissance ;
- un module 26 de réception des signaux numériques reçus d'un équipement ;
- un module 25 de transmission des signaux numériques devant être émis vers un équipement ;
- un module 29 d'acquisition et d'émission des signaux de et vers le bus de communication numérique du satellite.

En outre le boîtier standard 2 comporte un module de traitement 21 qui assure localement la gestion des différents modules, traite les signaux reçus et élabore les signaux à émettre en fonction de logiques et d'algorithmes mémorisés dans ledit module de traitement et/ou de commandes reçues sur le bus de communication numérique du satellite.

Pour des raisons de sûreté de fonctionnement, le boîtier standard comporte de préférence deux ensembles de modules répartis suivant deux voies, dites voie A et voie B, lesquelles deux voies assurent une redondance des fonctions réalisées par le boîtier standard.

Le schéma du boîtier standard 2 de la figure 4 représente une seule voie et des communications 27 entre les deux voies sont prévues pour gérer avantageusement les modules en redondance chaude. La définition d'architecture comportant de telles redondances fait partie des principes connus dans la conception des systèmes pour satellite.

Avantageusement, les équipements utilisés pour la réalisation des satellites présentant en pratique un nombre relativement limité d'interfaces, il est possible sans pénalité de concevoir un boîtier standard comportant les interfaces pour les équipements actuellement utilisés et qui est en mesure de satisfaire aux exigences pour appliquer l'invention sur la plupart des satellites actuels.

Dans un exemple pratique de réalisation, outre les capacités de raccordement à deux bus, par redondance, de communication bidirectionnel à la norme Mil Std 1553 et au bus de puissance électrique du satellite, un boîtier standard ayant deux voies comporte :
- pour le contrôle :
   - deux fois 10 entrées de signaux analogiques ;
   - deux fois 30 entrées pour capteurs de température d'un type « thermistance », e.g. thermistance 15kOhm ;
   - deux fois 2 entrées pour capteurs de température d'un type « sonde platine », e.g. PT1000 ;
   - deux fois 6 entrées pour signaux d'état à deux niveaux ;
   - deux fois 8 entrées pour signaux d'états de relais ;
   - deux fois 12 entrées numériques (RX) suivant le standard RS-422 ;
- pour la commande :
   - 4 commandes dites bas niveau et leurs redondances ;
   - 12 sorties numériques (TX) suivant le standard RS-422 et leurs redondances ;
   - 12 commandes de puissance et leurs redondances ;
- pour la distribution de puissance :
   - 10 lignes de distribution protégées par limiteurs de courant ;
   - 10 lignes pour dispositifs de réchauffage protégées par limiteurs de courant et leurs redondances.

Ces capacités correspondent à des zones de dimensions optimisées avec une technologie actuelle de satellite. Suivant le cas et en fonction de la technologie, les capacités d'un boîtier standard sont avantageusement adaptées, par exemple diminuées de moitié par rapport à ces valeurs tout en restant économiquement intéressant.

Pour que le boîtier standard 2 destiné à être installé dans une zone soit en mesure de répondre aux exigences des différents équipements 3 possibles sans nécessiter de différence d'ordre matériel par rapport à un boîtier de distribution électrique et de gestion standard, les modules comportent des possibilités de mises en configurations fonctionnelles en particulier par des modifications de paramètres.

En particulier les modules de traitement des signaux reçus sur des entrées destinées à être raccordées à des capteurs de température de type « thermistance » ont des gammes d'acquisition, plages de températures déterminées par une valeur minimale et une valeur maximale, pouvant être définies par programmation pour optimiser la précision de mesure.

De même, les modules de traitement des signaux analogiques de tension ont des gammes d'acquisition, tensions définies par une valeur minimale et une valeur maximale, pouvant être définies par programmation pour optimiser la précision de mesure.

De même les signaux reçus sur les entrées ou émis sur des sorties numériques au standard RS-422 sont programmables pour échanger des messages suivant des protocoles et/ou débits adaptés aux équipements, essentiellement, avec les équipements existants, suivant la norme dite UART, ou en acquisition série 16 bits en réception, ou en commande série 16 bits en émission, ou en horloge plus masque pour acquisition série 16 bits, ou en commandes bas niveau, ou en signaux de synchronisation. Avantageusement des micro-contrôleurs sont également implantés pour répondre à des besoins futurs de protocoles.

De même le type de limiteur de courant protégeant les lignes de distribution de puissance est configurable, par exemple entre limiteur / disjoncteur réarmable, limiteur disjoncteur à réarmement automatique et limiteur à repli pour couvrir les besoins satellite.

De même les calibres des limiteurs de courant protégeant les lignes de distribution de puissance sont modifiables par programmation, par exemple entre 0,25 ampère et 7,5 ampères pour couvrir les besoins des différents équipements.

Avantageusement les paramètres programmables du boîtier standard sont modifiables par des commandes envoyées au dit boîtier par le bus de communication du satellite, ici à la norme Mil Std 1553, de sorte que le boîtier est en mesure d'être configuré sans démontage ou déconnexion électrique après avoir été intégré sur la paroi correspondant ou après intégration complète du satellite.

Le cas échéant les boîtiers standards comportent des moyens physiques externes de sélection de modes accessibles tels que des pontages câblés entre des points de connecteurs d'un boîtier standard pouvant être ajoutés ou supprimés à la demande, cette possibilité pouvant se combiner avec la modification par programmation de paramètres.

Le boîtier standard 2 suivant l'invention est réalisée avec toute technologie adaptée aux satellites par exemple au moyen de composants conventionnels ou de préférence au moyen de composants à niveau d'intégration élevé type ASIC ou microprogrammés.

Une étude de faisabilité d'un boîtier présentant les capacités souhaitables identifiées ci-dessus montre qu'un tel boîtier est réalisable avec des dimensions de l'ordre de 160mm x 140mm x 70mm pour une masse d'environ 1100g et une consommation électrique propre en veille de l'ordre de 4 Watt.

La figure 5 représente un exemple de demi-boîtier, c'est à dire une partie d'un boîtier standard 2 qui correspond à une voie par exemple la voie représentée schématiquement sur la figure 4, et illustre que les dimensions d'un tel boîtier standard sont principalement imposées par des connecteurs 61, 62, 63, connecteurs associés aux interfaces et devant par ailleurs présenter toutes les qualités nécessaires à l'intégration dans un satellite et donc soumis à des contraintes sévères.

Ce point illustre un autre avantage de l'invention par rapport à un boîtier de distribution électrique et de gestion qui assurerait la distribution électrique de l'ensemble du satellite et sur lequel se raccorderaient les faisceaux électriques des différentes zones. Bien qu'un tel boîtier puisse s'avérer plus favorable sur le plan de la masse de l'installation de distribution que dans l'architecture de l'invention, son volume serait important en raison d'un nombre élevé de connecteurs nécessaires ce qui en compliquerait l'intégration surtout dans le cas de satellite de dimensions modestes.

Suivant l'architecture proposée il est ainsi possible de réaliser un satellite complexe comportant au moins deux zones avec une installation électrique indépendante pour chaque zone, centralisée à l'échelle de la zone, raccordée par l'intermédiaire d'un équipement unique standardisé et programmable, le boîtier standard, à un système simplifié de distribution électrique du satellite.

Cette architecture décentralisée à l'échelle du satellite et centralisée à l'échelle des zones permet de :
- augmenter la modularité de conception dans le cadre d'un satellite multi-missions en jouant simplement sur le nombre de boîtiers standards de distribution électrique et de gestion ;
- simplifier la conception du câblage des satellites et de faciliter significativement l'assemblage du satellite à partir de sous-ensembles ;
- découpler localement les activités électriques et mécaniques d'intégration et de test sur satellite ;
- mener localement les investigations sur une anomalie tout en poursuivant les tests sur le reste du satellite.

La possibilité de modifier certaines caractéristiques fonctionnelles du boîtier standard en reprogrammant le dit boîtier par le bus de communication du satellite auquel le boîtier est raccordé permet de réaliser sans démontage des corrections ou mises à jours pouvant être nécessaire par exemple en raison d'une évolution de spécification d'un équipement de la zone dont le boîtier assure la distribution électrique et/ou la gestion.

L'invention décrite dans le cas d'interfaces électriques actuellement parmi les plus utilisées sur les satellites est aisément adaptable à d'autres types d'interfaces que celles citées en fonction des besoins des équipements particuliers d'un satellite ou de nouveaux standards, par exemple d'autres interfaces électriques ou, en particulier pour les communications numériques, des interfaces de bus de communication optique.

## Revendications

1. Satellite comportant des équipements (3) connectés à un système électrique, ledit système électrique comportant un réseau de distribution d'énergie électrique, un réseau de télémesure et un réseau de télécommande, et étant électriquement séparé en au moins deux zones déterminant chacune un groupe d'équipements; **caractérisé en ce que**:
- dans chaque zone les équipements (3) du groupe d'équipements de ladite zone sont connectés à un système électrique indépendant, limité à ladite zone, comportant un réseau de distribution d'énergie électrique (31), un réseau de télémesure et un réseau de télécommande (32) ;
- le réseau de distribution de l'énergie électrique (31), le réseau de télémesure et le réseau de télécommande (32) du système électrique d'une même zone sont raccordés par une première série d'interfaces (22a, 23a, 24a, 25a, 26a) à un boîtier standard de distribution électrique et de gestion (2) associé à ladite zone ;
- le boîtier standard de distribution électrique et de gestion (2) de chaque zone est raccordé à un réseau (41) de distribution de puissance du satellite et à un réseau (51) de communication du satellite par une seconde série d'interfaces (22b, 29a).

2. Satellite suivant la revendication 1 dans lequel tous les boîtiers standards de distribution électrique et de gestion (2) sont mécaniquement et électriquement interchangeables.

3. Satellite suivant la revendication 1 ou la revendication 2 dans lequel un au moins des boîtiers standards de distribution électrique et de gestion (2) comporte au moins un module fonctionnel dont la configuration fonctionnelle est modifiable par programmation et ou par des moyens physiques externes.

4. Satellite suivant la revendication 3 dans lequel la configuration fonctionnelle d'au moins un des modules modifiables par programmation est modifiable au moyen de la liaison par le réseau (51) de communication du satellite.

5. Satellite suivant la revendication 4 dans lequel la liaison par le réseau (51) est une liaison par un bus numérique CAN ou une liaison par un bus à la norme MIL Std 1553.

6. Satellite suivant l'une des revendications 3, 4 ou 5 dans lequel au moins un des modules dont la configuration est modifiable est un module (26) de traitement de signaux numériques reçus ou un module (25) de traitement de signaux numériques devant être émis vers un équipement et dans lequel ledit module (25, 26) de traitement des signaux est apte à être programmé pour émettre des signaux suivant au moins la norme UART, ou en acquisition série 16 bits en réception, ou en commande série 16 bits en émission, ou en horloge plus masque pour acquisition série 16 bits, ou en commandes bas niveaux, ou en signaux de synchronisation.

7. Satellite suivant l'une des revendications 3 à 6 dans lequel au moins un des modules dont la configuration est modifiable est un module recevant des entrées destinées à être raccordées à des capteurs de température du type « thermistance » ou à recevoir des signaux analogiques de tension et dans lequel ledit module comporte des gammes d'acquisition de valeurs pouvant être définies par programmation.

8. Satellite suivant l'une des revendications 3 à 7 dans lequel au moins un des modules dont la configuration est modifiable est un module destiné à traiter des signaux reçus (26) sur des entrées ou émis (25) sur des sorties numériques au standard RS-422 et dans lequel ledit module (25, 26) est programmable pour être apte à échanger des messages suivant différents protocoles et/ou débits.

9. Satellite suivant l'une des revendications 3 à 8 dans lequel au moins un des modules dont la configuration est modifiable est un module (22) de contrôle de la distribution de l'énergie électrique comportant un ou des limiteurs de courants et dans lequel des calibres de limiteurs de courant protégeant des lignes de distribution de l'énergie électrique sont modifiables par programmation.

10. Satellite suivant l'une des revendications 3 à 9 dans lequel au moins un des modules dont la configuration est modifiable est un module (22) de contrôle de la distribution de l'énergie électrique comportant un ou des limiteurs de courants et dans lequel des types de limiteurs de courant protégeant des lignes de distribution de l'énergie électrique sont modifiables par des moyens physiques externes.

11. Satellite suivant l'une des revendications précédentes dans lequel les zones correspondent à des panneaux ou à des groupes de panneaux portant des équipements, les dits panneaux étant destinés à être assemblés dans le satellite.

## Claims

1. A satellite comprising equipment (3) connected to an electrical system, said electrical system comprising an electrical power distribution network, a telemetry network and a remote control network, and being electrically separated into at least two zones, each determining a set of equipment, **characterised in that**:
- in each zone, the equipment (3) of the set of equipment of said zone is connected to an independent electrical system limited to said zone, comprising an electrical power distribution network (31), a telemetry network and a remote control network (32);
- the electrical power distribution network (31), the telemetry network and the remote control network (32) of the electrical system of the same zone are connected, via a first set of interfaces (22a, 23a, 24a, 25a, 26a), to a standard electrical distribution and control box (2) associated to said zone;
- the standard electrical distribution and control box (2) for each zone is connected to a satellite power distribution network (41) and to a satellite communication network (51) via a second set of interfaces (22b, 29a).

2. A satellite according to claim 1 wherein all of the standard electrical distribution and control boxes (2) are mechanically and electrically interchangeable.

3. A satellite according to claim 1 or claim 2 wherein at least one of the standard electrical distribution and control boxes (2) comprises at least one functional module, the functional configuration of which can be modified via programming or using external physical means.

4. A satellite according to claim 3 wherein the functional configuration of at least one of the modules that can be modified by programming can be modified by means of the communication link of the satellite communication network (51).

5. A satellite according to claim 4 wherein the communication link of the network (51) is a link using a CAN digital bus or a link using a bus as per standard MIL Std 1553.

6. A satellite according to one of claims 3, 4 or 5 wherein at least one of the modules, the configuration of which can be modified, is a module (26) for processing digital signals reveived or a module (25) for processing digital signals to be transmitted to a piece of equipment and wherein said signal processing module (25, 26) is capable of being programmed to transmit signals at least as per the standard UART, or by a downstream 16-bint serial data acquisition link, an upstream 16-bit serial data control link, a clock and mask for a 16-bit serial data acquisition link, low level controls or by synchronisation signals.

7. A satellite according to one of claims 3 to 6 wherein at least one of the modules, the configuration of which can be modified, is a module receiving inlets intended to be connected to "thermistor"-type temperature sensors or to receive analogue voltage signals and wherein said module comprises value acquisition ranges capable of being defined via programming.

8. A satellite according to one of claims 3 to 7 wherein at least one of the modules, the configuration of which can be modified, in a modules intended to process the signals received (26) on inlets or transmitted (25) on digital outlets as per standard RS-422 and wherein said module (25, 26) can be programmed so as to exchange messages according to different protocols and/or flows.

9. A satellite according to one of claims 3 to 8 wherein at least one of the modules, the configuration of which can be modified, is a control module (22) for the electrical power distribution comprising one or multiple current limiters and wherein rated capacities of current limiters protecting the electrical power distribution lines can be modified via programming.

10. A satellite according to one of claims 3 to 8 wherein at least one of the modules, the configuration of which can be modified, is a control module (22) for the electrical power distribution comprising one or multiple current limiters and wherein the types of current limiters protecting the electrical power distribution lines can be modified using external physical means.

11. A satellite according to one of the previous claims wherein the zones correspond to panels or groups of panels supporting the equipment, said panels being intended for assembly within the satellite.

## Patentansprüche

1. Satellit umfassend Apparaturen (3), die an ein elektrisches System angeschlossen sind, wobei das besagte elektrische System ein Versorgungsnetz für elektrische Energie, ein Fernmessnetz und ein Fernsteuerungsnetz umfasst, und elektrisch in zumindest zwei Zonen geteilt ist, von denen jede eine Apparategruppe bestimmt, **dadurch gekennzeichnet, dass**:
- die Apparaturen (3) der Apparategruppe der besagten Zone in jeder Zone mit einem unabhängigen elektrischen System verbunden sind, das sich auf die besagte Zone beschränkt, umfassend ein Versorgungsnetz für elektrische Energie (31), ein Fernmessnetz und ein Fernsteuerungsnetz (32);
- das Versorgungsnetz für elektrische Energie (31), das Fernmessnetz und das Fernsteuerungsnetz (32) des elektrischen Systems ein und derselben Zone durch eine erste Reihe an Schnittstellen (22a, 23a, 24a, 25a, 26a) mit einem Standardkasten zur Stromverteilung und Steuerung (2) verbunden sind, der der besagten Zone zugeordnet ist;
- der Standardkasten zur Stromverteilung und Steuerung (2) jeder Zone über eine zweite Reihe an Schnittstellen (22b, 29a) mit einem Netzwerk (41) zur Leistungsverteilung des Satelliten und mit einem Kommunikationsnetzwerk (51) des Satelliten verbunden ist.

2. Satellit nach Anspruch 1, bei dem alle Standard kästen zur Stromverteilung und Steuerung (2) mechanisch und elektrisch austauschbar sind.

3. Satellit nach Anspruch 1 oder Anspruch 2, bei dem zumindest einer der Standardkästen zur Stromverteilung und Steuerung (2) zumindest eine Funktionseinheit umfasst, deren funktionale Konfiguration durch Programmierung und/ oder durch externe physische Mittel verändert werden kann.

4. Satellit nach Anspruch 3, bei dem die funktionale Konfiguration zumindest einer der durch Programmierung veränderbaren Einheiten durch eine Verbindung mit dem Kommunikationsnetzwerk (51) des Satelliten verändert werden kann.

5. Satellit nach Anspruch 4, bei dem die Netzwerkverbindung (51) eine Verbindung über einen digitalen CAN Bus oder eine Bus-Verbindung der Norm MIL Std 1553 ist.

6. Satellit nach einem der Ansprüche 3, 4 oder 5, bei dem zumindest eine der Einheiten, deren Konfiguration veränderbar ist, eine Einheit (26) zur Verarbeitung empfangener digitaler Signale oder eine Einheit (25) zur Verarbeitung von digitalen Signalen ist, die zu einer Apparatur zu senden sind, und bei dem die besagte Einheit (25, 26) zur Signalverarbeitung so programmiert werden kann, um Signale entsprechend zumindest der UART Norm senden zu können, oder für die 16 Bit Serienerfassung beim Empfang, oder für eine 16 Bit Seriensteuerung beim Senden, oder als Taktgeber plus Maske zur 16 Bit Serienerfassung, oder für Steuerungen im Niederniveaubereich, oder für Synchronisierungssignale.

7. Satellit nach einem der Ansprüche 3 bis 6, bei dem zumindest eine der Einheiten, deren Konfiguration veränderbar ist, eine Einheit ist, die Eingänge empfängt, die dazu bestimmt sind, mit Temperatursensoren vom Typ "Thermistor" verbunden zu werden, oder analoge Spannungssignale zu empfangen, und bei dem die besagte Einheit Erfassungsreihen für Werte umfasst, die durch Programmierung festgelegt werden können.

8. Satellit nach einem der Ansprüche 3 bis 7, bei dem zumindest eine der Einheiten, deren Konfiguration veränderbar ist, eine Einheit ist, die dazu bestimmt ist, an den Eingängen empfangene (26) oder an den digitalen Ausgängen im Standard RS-422 gesandte (25) Signale zu verarbeiten, und bei dem die besagte Einheit (25, 26) programmierbar ist, um in der Lage zu sein, Nachrichten entsprechend verschiedener Protokolle und/ oder Übertragungsraten austauschen zu können.

9. Satellit nach einem der Ansprüche 3 bis 8, bei dem zumindest eine der Einheiten, deren Konfiguration veränderbar ist, eine Einheit (22) zur Steuerung der Stromversorgung ist, mit einem oder mehreren Strombegrenzern und brei dem die Kaliber der Strombegrenzer, die die Stromverteilungsleitungen schützen, durch Programmierung verändert werden können.

10. Satellit nach einem der Ansprüche 3 bis 9, bei dem zumindest eine der Einheiten, deren Konfiguration veränderbar ist, eine Einheit (22) zur Steuerung der Stromversorgung ist, mit einem oder mehreren Strombegrenzern und bei dem die Strombegrenzertypen, die die Stromverteilungsleitungen schützen, durch externe physische Mittel verändert werden können.

11. Satellit nach einem der vorherigen Ansprüche, bei dem die Zonen Platten oder Plattengruppen entsprechen, auf denen Apparaturen angebracht sind, und die besagten Platten dazu bestimmt sind, im Satelliten zusammengesetzt zu werden.
